# EUROPÄISCHE PATENTANMELDUNG

(11) **EP 2 647 852 A2**
(43) Veröffentlichungstag der Anmeldung: **09.10.2013**
(21) Anmeldenummer: 13401029.7
(22) Anmeldetag: 26.03.2013
(51) Int. Cl.: F16B 43/00

(54) **Unterlegscheibe**

(30) Priorität: 04.04.2012 DE 102012102926
(71) Anmelder: Amazonen-Werke H. Dreyer GmbH & Co. KG, 49205 Hasbergen (DE)
(72) Erfinder: Behnert, Dominik, 49078 Osnabrück (DE)

(57) **Zusammenfassung**

Unterlegscheibe (7) für mittels Schrauben zu verbindende lackierte Bauelemente (1,2) eines insbesondere landwirtschaftlichen Gerätes, wobei in den zu verbindenden Bauteilen Löcher (3)angeordnet sind, welche von den Schrauben (5) durchgegriffen werden, wobei die Unterlegscheibe jeweils zwischen dem Schraubenkopf und der Mutter der Schraube einerseits und andererseits dem lackierten Bauteil angeordnet ist, wobei auf der dem lackierten Bauelement zugewandten Seite der Unterlegscheibe eine lackschonende Beschichtung (8) vorhanden ist. Um Unterlegscheiben zur Verfügung zu stellen, dass lackierte Bauteile ohne die Gefahr der Beschädigung der Lackschicht miteinander verbunden werden können, ist vorgesehen, dass die lackschonende Beschichtung der Unterlegscheibe eine in das jeweilige Loch des zu verbindenden Bauelementes fassenden ringförmigen Ansatz (12) aufweist.

## Beschreibung

Die Erfindung betrifft eine Unterlegscheibe gemäß des Oberbegriffes des Patentanspruches 1.

Derartige Unterlegscheiben sind in vielfältiger Weise bekannt.

So werden beispielsweise beim Verbinden von lackierten Bauteilen eines landwirtschaftlichen Gerätes, wobei in den zu verbindenden Bauteilen Löcher angeordnet sind, welche von Schrauben durchgegriffen werden, die Unterlegscheiben jeweils zwischen dem Schraubenkopf und der Mutter der Schrauben einerseits und andererseits dem lackierten Bauteil angeordnet. Hierbei ist auf der dem lackierten Bauelement zugewandten Seite der Unterlegscheibe eine lackschonende Beschichtung vorhanden. Diese Beschichtung besteht beispielsweise aus einer flachen Gummischeibe. Diese Gummischeibe ist mit der aus Stahl bestehenden eigentlichen Unterlegscheibe verklebt. Die Gummischeibe lässt sich nicht ausreichend genau zu den Löcher in den Bauteilen positionieren, so dass die durch die Löcher greifenden Schrauben die Lackschicht zumindest in den Löchern oder in deren Randbereich beschädigen. Weiterhin kommt es aufgrund mangelhafter zentrierter Anordnung der Scheiben zu großen Flächenpressungen an den Kanten der Löcher, die von den Schrauben zum Verbinden der Bauteile durchgriffen werden, so dass dort die Lackschicht abplatzt.

Der Erfindung liegt die Aufgabe zugrunde, Unterlegscheiben zur Verfügung zu stellen, dass lackierte Bauteile ohne die Gefahr der Beschädigung der Lackschicht miteinander verbunden werden können.

Diese Aufgabe wird erfindungsgemäß dadurch gelöst, dass die lackschonende Beschichtung der Unterlegscheibe eine in das jeweilige Loch des zu verbindenden Bauelementes fassenden ringförmigen Ansatz aufweist.

Infolge dieser Maßnahme wird die Unterlegscheibe und damit die die zu verbindenden Bauteile durchgreifenden Schrauben durch den ringförmigen Ansatz so in dem Bereich der Löcher so positioniert, dass die Lackschicht nicht beschädigt wird. Hierbei sind die Abmessungen des Außendurchmessers des ringförmigen Ansatzes und der Innendurchmesser der mit einer Lackschicht beschichten Lochwand des Loches entsprechend aufeinander abgestimmt. Der Außendurchmesser des Ansatzes ist keinesfalls größer als der Innendurchmesser des mit einer Lackschicht versehenen Loches.

Eine besonders vorteilhafte lackschonende Beschichtung mit einer ausreichenden großen Festigkeit der Beschichtung wird dadurch erhalten, dass die lackschonende Beschichtung der Unterlegscheibe aus Polyamid besteht. Die Beschichtung lässt sich in einfacher durch ein Kunststoffspritz- oder - fertigungsverfahren an der Stahlscheibe als Grundkörper anbringen.

Eine besonders lackschonende Ausgestaltung ergibt sich dadurch, dass die lackschonende Beschichtung zusätzlich auf der Wand des Loches in der Unterlegscheibe angebracht ist. Vorteilhaft besteht der Grundkörper der Unterlegscheibe aus Edelstahl.

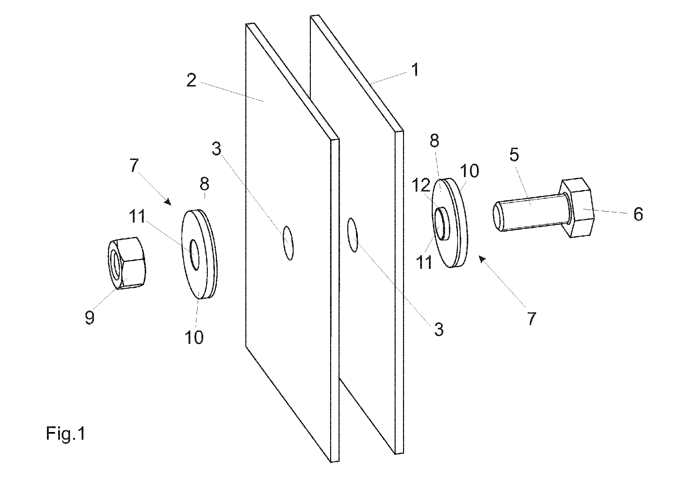

Weitere Einzelheiten der Erfindung sind der Beispielsbeschreibung zu entnehmen. Die Zeichnungen zeigen
- Fig.1: die Anordnung der Unterlegscheiben für die lackschonende Verbindung von zwei lackierten Bauteilen mit einer Schraubverbindung in perspektivischer und Explosionsdarstellung,
- Fig.2: die Anordnung der Unterlegscheiben für die lackschonende Verbindung von zwei lackierten Bauteilen mit einer Schraubverbindung in montierter Anordnung und in Schnittdarstellung
- Fig.3: die erfindungsgemäße Unterlegscheiben mit lackschonender Beschichtung und ringförmigem Ansatz in perspektivischer Darstellung und
- Fig.4: die Unterlegscheiben gem. Fig.3 in Schnittdarstellung.

Die in Prinzipdarstellung dargestellten Platten 1 und 2, welche beispielsweise die obere Fläche 1 eines Vorratsbehälters eines landwirtschaftlichen Gerätes, insbesondere einer Verteilmaschine und die untere Fläche 2 eines darauf aufgesetzten Aufsatzbehälters zur Vergrößerung des Aufnahmevermögens des Vorratsbehälters sein können, sind zum Korrosionsschutz mit einer Lackschicht versehen. Zum Verbinden dieser beiden als Platten 1, 2 ausgebildeten Bauelemente sind in den Platten 1, 2 Löcher 3 angebracht, wobei auch die Lochwand 4 mit einer Lackschicht versehen ist. Die Löcher 3 werden von der Schraube 5 zum Verbinden der beiden lackierten Platten 6 der Schraube 5 miteinander durchgegriffen. Zwischen dem Schraubenkopf und der benachbarten Fläche der lackierten Platte 1 ist die Unterlegscheibe 7 mit einer lackschonenden Beschichtung 8 angeordnet. Ebenfalls ist eine Unterlegscheibe 7 mit einer lackschonenden Beschichtung 8 zwischen der Mutter 9, die auf das Schraubgewinde der Schraube 5 aufgedreht ist, und der benachbarten Fläche der lackierten Platte 2 angeordnet.

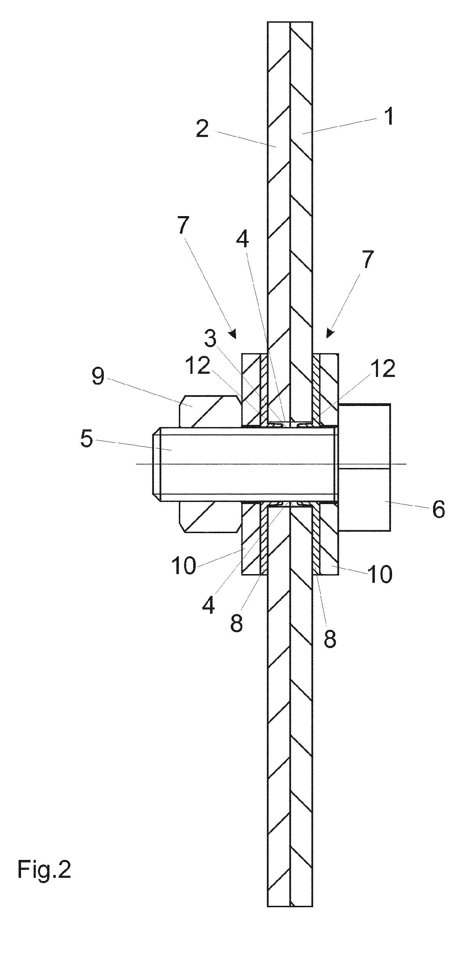

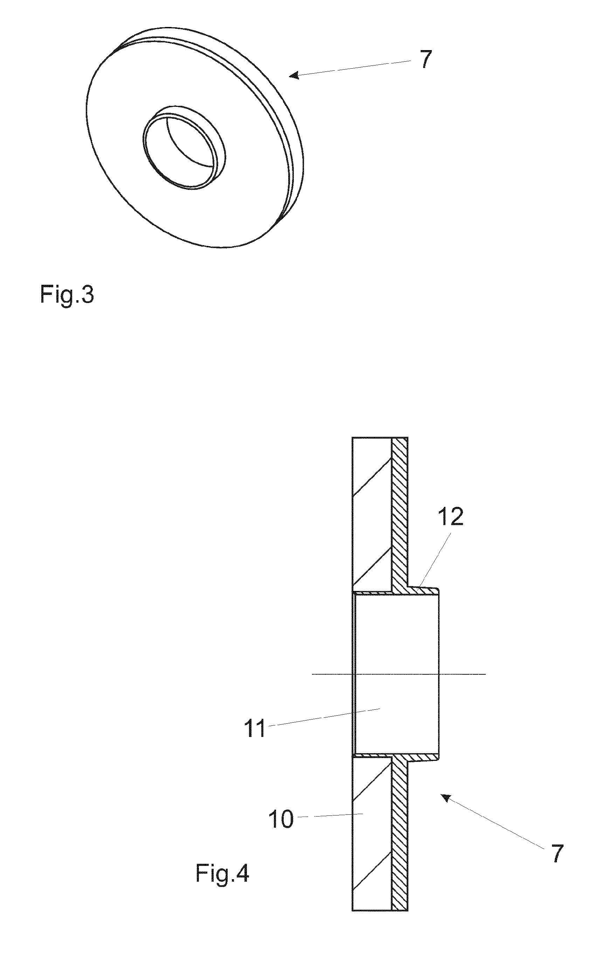

Der Grundkörper 10 der Unterlegscheiben 7 besteht jeweils aus Edelstahl. Die lackschonende Beschichtung 8 der Unterlegscheiben 7 weist im Bereich des Durchgangloches 11 der Unterlegscheiben 7 einen ringförmigen Ansatz 12 auf. Dieser ringförmige Ansatz 12 ist derart ausgebildet, dass er nach dem Auflegen auf die Platten 12, im Bereich des Loches 3 der zu verbindenden Platten 1, 2 in das jeweilige Loch 3 des zu verbindenden Bauteils 1 ,2 fast. Somit weist die lackschonende Beschichtung 8 der Unterlegscheibe 7 eine in das jeweilige Loch 3 des zu verbindenden Bauelementes 1, 2 fassenden ringförmigen Ansatz 12 auf, wie Fig. 2 zeigt. Weiterhin ist die lackschonende Beschichtung 8 zusätzlich auf der Wand des Loches 11 in der Unterlegscheiben 7 angebracht, wie Fig. 4 zeigt.

Die lackschonende Beschichtung 8 der Unterlegscheiben 7 besteht aus Polyamid.

Durch die lackschonende Beschichtung 8 aus Polyamid wird eine lackschonende Montage und Verbindung der beiden Bauelemente 1, 2miteinander erreicht, so dass im Bereich der Verbindungsstelle durch die Schraube 5 und die Unterlegscheiben 7 keine Lackschäden an der Lackschicht der lackierten Platten 1, 2 im Bereich des Verbindungsloches 3, durch welches die Schraube 5 greift, entsteht.

Die Unterlegscheibe 7 und damit die die zu verbindenden Bauteile 1, 2 durchgreifenden Schrauben 5 werden durch den ringförmigen Ansatz 12 so in den Löchern 3 positioniert, dass die Lackschicht nicht beschädigt wird. Hierbei sind die Abmessungen des Außendurchmessers des ringförmigen Ansatzes 12 und der Innendurchmesser des mit einer Lackschicht beschichten Lochwand des Loches 3entsprechend aufeinander abgestimmt. Der Außendurchmesser ist keinesfalls größer als der Innendurchmesser des mit einer Lackschicht versehenen Loches 3.

## Patentansprüche

1. Unterlegscheibe für mittels Schrauben zu verbindende lackierte Bauelemente eines insbesondere landwirtschaftlichen Gerätes, wobei in den zu verbindenden Bauteilen Löcher angeordnet sind, welche von den Schrauben durchgegriffen werden, wobei die Unterlegscheibe jeweils zwischen dem Schraubenkopf und der Mutter der Schraube einerseits und andererseits dem lackierten Bauteil angeordnet ist, wobei auf der dem lackierten Bauelement zugewandten Seite der Unterlegscheibe eine lackschonende Beschichtung vorhanden ist, **dadurch gekennzeichnet, dass** die lackschonende Beschichtung (8) der Unterlegscheibe (7) eine in das jeweilige Loch (3) des zu verbindenden Bauelementes (1, 2) fassenden ringförmigen Ansatz (12) aufweist.

2. Unterlegscheibe nach Anspruch 1, **dadurch gekennzeichnet, dass** die lackschonende Beschichtung (8) der Unterlegscheibe (7) aus Polyamid besteht.

3. Unterlegscheibe nach zumindest einem der vorstehenden Ansprüche, **dadurch gekennzeichnet, dass** die lackschonende Beschichtung (8) zusätzlich auf der Wand des Loches (11) in der Unterlegscheibe (7) angebracht ist.
